# EUROPEAN PATENT SPECIFICATION

(11) **EP 1 459 004 B1**
(45) Date of publication and mention of the grant of the patent: **17.10.2007**
(21) Application number: 02793738.2
(22) Date of filing: 20.12.2002
(51) Int. Cl.: F16L 13/14, F16L 27/08

(54) **END CONNECTION FOR TUBES AND A METHOD FOR ITS MANUFACTURING**
ENDVERBINDUNG FÜR ROHRE UND HERSTELLUNGSVERFAHREN DAFÜR
CONNECTEUR D'EXTREMITE POUR TUBES , ET PROCEDE DE REALISATION D'UN CONNECTEUR DE CE TYPE

(30) Priority: 27.12.2001 SE 0104448
(43) Date of publication of application: 22.09.2004
(73) Proprietor: VOLVO LASTVAGNAR AB, 405 08 Göteborg (SE); Thorensen, Rolf, 44636 Älvängen (SE)
(72) Inventor: THORENSEN, Rolf, S-446 36 Älvängen (SE)
(74) Representative: Mossmark, Anders Lennart
(86) International application number: PCT/SE2002/002442
(87) International publication number: WO 2003/056226

(56) References cited:
- DE-A- 1 475 640
- DE-A1- 19 507 688
- SE-A- 9 101 420

## Description

### TECHNICAL FIELD

The present invention relates to an end connection for pipes made in a rigid, but deformable material, and comprising a pipe end with a pipe casing which protrudes into the pipe end and has an outer end with a connection portion for fixed mounting to an untwistable part which pipe casing is rotationally symmetric along a longitudinal axis and which is made in a relatively rigid material and is equipped with a mantle surface, which has a diameter that is adapted to the inner diameter of the pipe in such a way that the pipe end may be applied on the pipe casing, where the mantle surface is equipped with at least two recessed parts which run peripherally around the mantle surface, in which recessed parts embossed parts of the applied pipe end extend, where at least one sealing organ ensures sealing between the pipe casing and pipe end, said sealing organ has a placement that is separated from the axial placement of the embossed and recessed parts, more precisely in an intermediate part of the mantle surface of the pipe casing.

### BACKGROUND ART

From US 6,059,338 it is previously known to arrange a pipe connection in the form of a tubular casing that is inserted in one end of a pipe. The pipe casing is formed with countersinks in which embossings are embossed, where a sealing element is arranged between the pipe casing and the pipe end. In order to obtain complete sealing, the sealing element has to be compressed, thus rendering the friction between the sealing element and the pipe casing on one hand and the pipe end on the other hand so high that any relative rotation between the pipe casing and the pipe end normally is not possible.

Document DE (195 07688A1) discloses a connection of two pipe ends having two embossed parts in the radially inner end and two embossed parts in the outer end extending into the inner embossed parts and a sealing member positioned in an intermediate part axially between the embossed parts. D1 discloses a rigid connection as apparent from column 2, lines 53 to 55 telling that there is a form and friction locking between the pipe ends.

For certain types of connections, the connection must be made in a predetermined rotational position of the connection relative to, for example, a fixed part in a pipe system. At conventional pipe connections, for example hydraulic systems, the pipe end and the included pipe casing are in many cases firmly connected with each other by means of soldering. Thus the pipe casing must be connected to the pipe end with a predetermined rotational angle, which requires special fixtures for final assembly of the end connection.

### DISCLOSURE OF INVENTION

The purpose of the present invention is to present an end connection at which no fixed rotational angle between the parts is required at their assembly. Another purpose of the present invention is to present a method according to the invention, at which a final assembly of the end connection may be performed without having to fix a predetermined rotational angle between the parts.

Said object is achieved by means of an end connection according to the invention, which is described in claim 1.

Said object is also achieved by means of a method according to the present invention, which characterising features are apparent from the appended claim 5.

### BRIEF DESCRIPTION OF DRAWINGS

The invention shall in the following be described more in detail with a number of embodiment examples with reference to the appended drawings, where
- Fig. 1: shows a side view of a part of an end connection according to the invention in a first embodiment,
- Fig. 2: shows a longitudinal section through the end connection along the line II-II in fig. 1,
- Fig.3: is a side view of a finished end connection in a somewhat modified form of the first embodiment,
- Fig. 4: is a longitudinal section along the line IV-IV in fig. 3,
- Fig. 5: is a side view of a finished end connection in a third embodiment, and
- Fig. 6: is a longitudinal section through the end connection according to fig. 5 along the line VI-VI in fig. 5.

### PREFERRED EMBODIMENTS

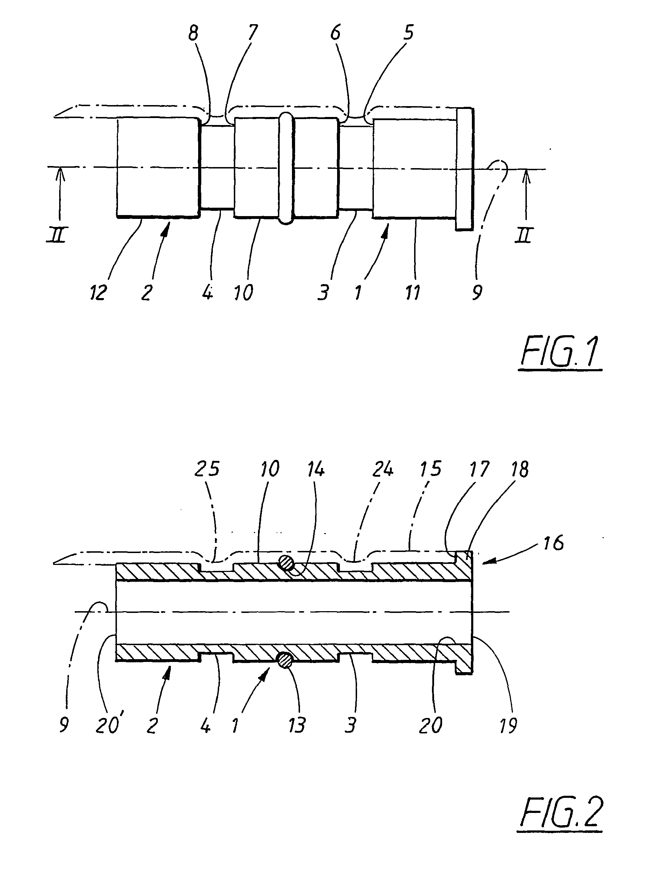

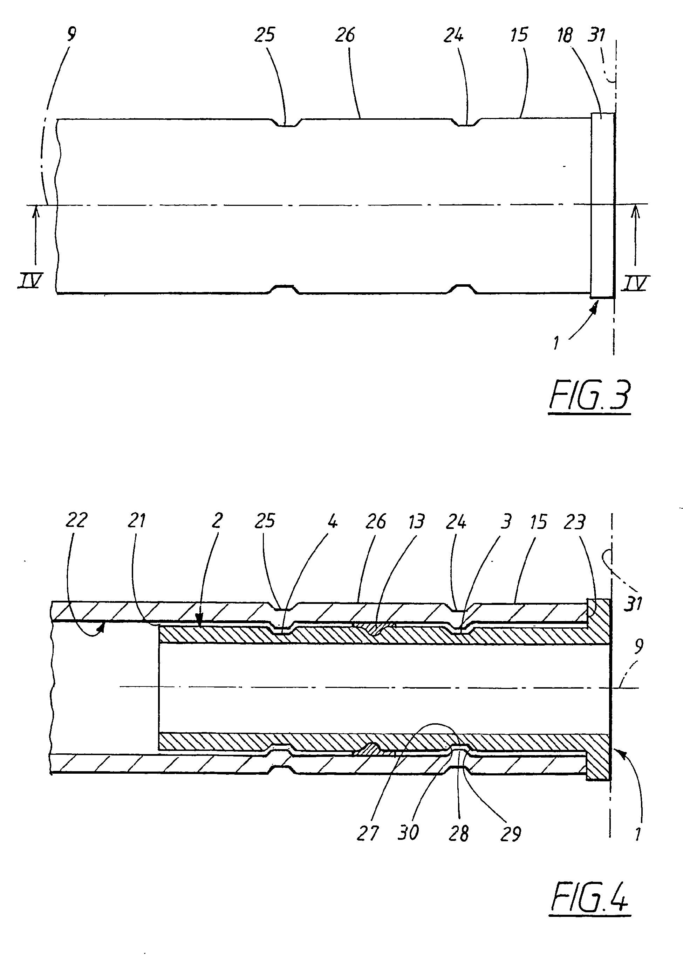

The end connection according to the invention shall first be described in a first embodiment with reference to figs. 1 and 2. The end connection consists of a pipe casing 1, which mainly is cylindrical and equipped with a mantle surface 2. In the mantle surface, recessed parts 3, 4 are arranged, which parts 3, 4 in the example shown are two and are also cylindrical and in the example shown equipped with abrupt transitions in the form of step edges 5, 6, 7, 8. These are in the first example shown thus lateral to the longitudinal axis 9 of the pipe casing and each one extends in its radial plane. Alternatively, the step edges 5-8 may be inclined, i.e. conical, see the forms in figs. 3-6, and may even meet in pairs in a common tip thus rendering the recessed parts a V-shaped cross sectional form. An example of another cross sectional form is U-form. The recesses are placed at a distance from each other, enabling an intermediate part 10 to form between these, which intermediate part 10 is cylindrical and thus is a part of the mantle surface 2 of the pipe casing. The mantle surface 2 will thus be divided into an intermediate part 10 and two outer parts 11, 12 of the mantle surface. In the example shown, the intermediate part is relatively symmetrically oriented along the length of the pipe casing 1, such that the outer parts 11, 12 mainly are of the same size. The three parts essentially have the same proportions, i.e. that the recesses 3, 4 divide the three parts of the mantle surface 2 into portions which mainly are of the same size, in the example shown with a slightly longer intermediate part. In the example shown, the recesses have the same mutual width and depth, and considerably fall below the axial length of the intermediate part. Each recess 3, 4 has a width that falls below half the axial length of the intermediate part, in the example mainly a third of its length. The depth of the recesses is limited by the wall thickness of the pipe casing, and are in the example shown of the magnitude half the wall thickness.

Around the periphery of the intermediate part 10, one or more sealing elements 13 extend, which sealing elements 13 are made in an elastic, deformable material, such as a polymer or rubber. In the example shown, one sealing element 13 is used and centred symmetrically, i.e. in the middle of the mantle surface of the intermediate part 10, more precisely in a groove 14 which is formed to receive a part of the sealing element, for example half of its cross-sectional dimension. In the example shown, the sealing ring is an O-ring with a circular cross-sectional shape, where the groove preferably has the cross-sectional form of a semicircle with the same diameter as the undeformed sealing ring. The sealing element may have other forms, for example rectangular, oval, triangular cross sectional form, where the groove 14 has a form and dimensions which are adapted to the cross sectional form and dimensions of the sealing element. More sealing elements may be arranged side by side at a suitable distance distributed over the length of the intermediate part, not, however, in the immediate vicinity of the recessed parts 3, 4. In figs. 1 and 2 the sealing element 13 is shown in an undeformed condition, i.e. before the pipe casing 1 is inserted into a pipe end. The fact is that an end part 15 of a pipe is included in the end connection, which end part 15 in figs. 1 and 2 only is indicated schematically with dotted lines on one of the sides of the pipe casing. In order to ensure a correct position between the pipe casing and the end part 15, the pipe casing is formed with a ring-shaped stop edge 17 and its outer end 16, which stop edge 17 in the first and second embodiment is a part of a ring-shaped flange 18 which surrounds the outer or the front opening 19 of the pipe casing. Internally, the pipe casing is equipped with a cylindrical lead-through 20 which extends from the back or inner opening 20' of the casing to the outer opening 19.

In figs. 3 and 4 a complete end connection according to the invention in a second, somewhat modified embodiment is shown, which embodiment, however, externally has the same appearance as the first embodiment. The pipe casing 1 also has the same main construction, the recesses have, however, been given a lesser width and the step edges 5-8 have been made less abrupt and form incline conical step surfaces. The width of the recesses, i.e. the axial dimension is, however, preferably greater than their depth, i.e. the radial dimension. Further, the outer diameter of the pipe casing is dimensioned to have a ring-shaped interspace 21 between the mantle surface 2 and the cylindrical inner wall 22 of the pipe end. It is further apparent from fig. 4 that the sealing element 13 in this condition with the pipe end applied is deformed to a high extent, i.e. flattened at the inner wall 22 of the pipe end, and is admitted to propagate somewhat axially in the ringformed interspace 21.

The pipe casing 1 is inserted in the pipe end 15 such that the ring-shaped front surface 23 of the pipe end is in contact with the stop edge 17 of the pipe casing. According to the invention, the pipe end is equipped with embossings 24, 25 in front of the recessed parts 3, 4 of the pipe casing. The embossings are of such character that they mainly cause a radial displacement of the material in the pipe wall, i.e. that an embossing of the outer mantle wall 26 of the pipe end results in a corresponding embossing of the inner wall 22 of the pipe end. The embossing is chosen with such a radial depth that the inside 27 of the embossings have a distance to the longitudinal axis 9 which falls below the outer diameter of the pipe casing, i.e. protrudes into the recessed parts. This means that the pipe end mainly is axially locked relative to the pipe casing, i.e. locked against axial relative movements with minor tolerances. In practice, the embossings may be allowed to "touch bottom", i.e. that they reach contact with their inside 27 against the bottom surface 28 of the recesses or some of the edge surfaces 29, 30. The contact pressure, i.e. the clamping force in the acquired clamping function, shall, however, be balanced in such a way in combination with the friction between the sealing element 13 and its bearing surfaces, i.e. the inner wall 22 of the pipe end and/or the mantle surface 2 of the pipe casing, that a relative rotational movement is possible between the pipe end 15 and pipe casing 1 when a torque is applied on the pipe end, exceeding a certain value. This value may for example be a torque which arises at a pretension that arises in a relatively rigid pipe conduit which end is constituted by the pipe end 15 and where the connecting part of the end connection, in the example 18, is fixed mounted at an untwistable part 31, for example the wall of a machine part.

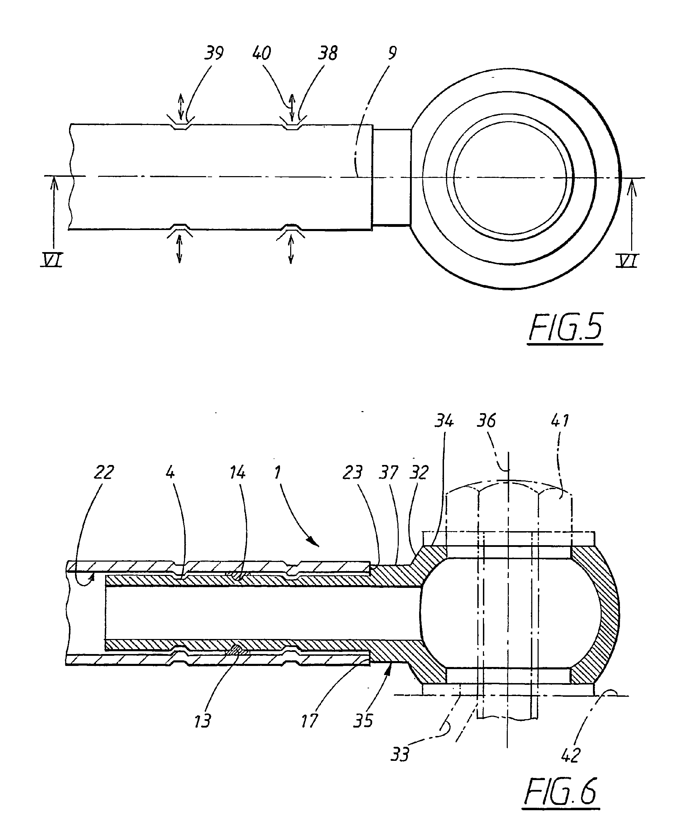

In figs. 5 and 6 a further embodiment is shown, which completely corresponds to the embodiment according to figs. 3 and 4 regarding the clamping technique, but where the pipe casing 1 outside the pipe end 15 is formed in another way, and that is a so-called banjo-type nipple 32. This is intended for connection to a fixed fluid channel 33, which is indicated with dashed and dotted lines. The banjo-type nipple is formed with two parallel mlain connection surfaces 34, 35 for connection against the fixed orifice of the channel and enables adjustment of the nipple in a predetermined rotational position along the longitudinal axis 36 to a fastening screw 41, which is indicated in fig. 6 with a dashed and dotted line. The fastening screw 41 is screwed into a fixed part 42 with an intermediate sealing washer. The connection communicates with the fixed channel 33 through one of the openings of the nipple, while the opposite opening is sealed by means of the screw head and a washer. Thus a predetermined direction of the longitudinal axis 9 of the end connection which is suitable for the mounting is chosen, while that of the banjo-type nipple, i.e. the rotational position of the pipe casing 1 along its longitudinal axis 9, is determined by the surfaces 34, 35 of the banjo-type nipple, i.e. their connection planes. By means of the end connection according to the invention, the pipe casing 1 may thus be turned to a rotational movement which is adapted for the mounting along its longitudinal axis 9 as the pipe end 15 may be turned around the longitudinal axis 9 by means of the turnable axially mainly locked connection between the pipe end and the pipe casing. The front surface 23 of the pipe end is in the example according to figs. 5 and 6 axially controlled in one of the directions as the banjo-type nipple is equipped with a thicker part 37 outside the pipe end and which by means of the step 17 transcends to the pipe casing with a main diameter that somewhat falls below the diameter of the inner wall 22 of the pipe end.

The manufacture of the end connection according to the invention has indirectly mainly been disclosed by the embodiments described above, but will in the following be summarised. The pipe casing 1 is thus made in a relatively hard material, suitably metal which is relatively hard to deform, for example galvanised steel or some alloy thereof. The pipe casing is equipped with its recessed parts 3, 4 and the groove 14 for the sealing element by means of for example turning or milling. The sealing element is applied on the pipe casing and placed in its groove. Thereafter, the pipe end 15 is applied on the pipe casing 1. The pipe end thus belongs to a fluid pipe, for example a hydraulic pipe or compressed air pipe, which for example shall have an untwistable connection in its opposite end. The pipe end and the associated pipe is for example made in a somewhat softer, i.e. more easy to deform, material which mainly provides a plastically remaining deformation, for example copper, aluminium or some other suitable alloy thereof. The pipe end is applied until its front end comes into contact with the stop edge 17 of the pipe casing 1. Then, the relative axial position of the pipe end and the pipe casing has been taken.

Thus, the free end of the pipe casing, for example the banjo-type nipple, is retained in a fixture or another retainer, which retains the pipe casing. In fixed positions relative to the fixture, clamping devices 38, 39 are arranged, which have a clamping part that is schematically indicated in fig. 5. These may either be arranged in as many sets as the number of recesses 3, 4, i.e. in the example shown two, or be a tool that in one sequence performs the work in front of each recessed part. The clamping devices may be arranged such as springing rings which are allowed to be brought radially inwards in the direction towards the longitudinal axis 9 a distance such that the permanent embossings 24, 25 are arranged in the pipe end such that they at least somewhat protrude into the recessed parts 3, 4. After the procedure has been performed, the clamping devices are brought back radially outwards, see the direction of the double arrows 40. The embossings may be continuous and extend in a ring-shaped manner around the whole periphery of the pipe end or be local embossings, at least three and uniformly distributed over the periphery. The recessed parts must, however, be ring-shaped in order to enable the relative rotational movement.

The pipe and thereby the pipe end 15 are thus originally not a specially made part, in contrast to a pipe-shaped coupling part or nipple, but the pipe end is formed by means of cutting off a continuous pipe to a desired length, which pipe is homogeneous and mainly has a mantle that is cylinder-shaped, regarding both its inner surface and its outer surface, i.e. without abrupt shelves.

## Claims

1. End connection for pipes made in a rigid, but deformable material, and comprising a pipe end (15) with a pipe casing (1) which protrudes into the pipe end and has an outer end (16) with a connection portion (18/32) for fixed mounting to an untwistable part (31/42) which pipe casing (1) is rotationally symmetric along a longitudinal axis (9) and which is made in a relatively rigid material and is equipped with a mantle surface (2), which has a diameter that is adapted to the inner diameter of the pipe in such a way that the pipe end may be applied on the pipe casing, said pipe casing including a sealing organ (13) disposed symmetrically between two recessed parts (3, 4) which run peripherally around the mantle surface, in which recessed parts (3, 4) embossed parts of the applied pipe end extend, said sealing organ (13) ensuring sealing between the pipe casing and pipe end, said sealing organ (13) has a placement that is separated from the axial placement of the embossed and recessed parts, more precisely in an intermediate part (10) of the mantle surface (2) of the pipe casing (1), having an end abutment (17, 23) for the pipe, **characterized in, that** the two recesses (3, 4) and a recess (14) for accommodating the sealing organ (13) are all formed into the pipe casing (1) and are all inwardly directed towards the longitudinal axis of the pipe casing (1).

2. End connection according to claim 1, **characterized in, that** the end abutment (17, 23) is equipped with a widened part (18/32) which forms an axial end stop (17) for the pipe end (15).

3. End connection according to claim 2, **characterized in, that** the widened part (32) is constituted by a banjo-type nipple with contact surfaces (34), situated in said connection plane.

4. End connection according to claim 2**, characterized in, that** the widened part is constituted by a threaded part in order to connect to a corresponding threaded, fixed part, by means of the end connection.

## Patentansprüche

1. Endverbindung für Rohre, welche aus einem steifen, aber verformbaren Material bestehen und ein Rohrende (15) aufweisen, mit einem Rohrgehäuse (1), welches in das Rohrende hervorsteht und ein äußeres Ende (16) mit einem Verbindungsabschnitt (18/32) zum festen Montieren an ein nicht drehbares Teil (31/42) aufweist, wobei das Rohrgehäuse (1) entlang einer Längsachse (9) rotationssymmetrisch ist, aus einem relativ steifen Material besteht und mit einer Mantelfläche (2) versehen ist, welche einen Durchmesser aufweist, welcher an den Innendurchmesser des Rohres derart angepasst ist, dass das Rohrende am Rohrgehäuse angebracht werden kann, wobei das Rohrgehäuse ein Dichtungselement (13) enthält, welches zwischen zwei Aussparungen (3, 4) symmetrisch angeordnet ist, welche entlang dem Umfang um die Mantelfläche gehen, wobei in den Aussparungen (3, 4) sich Ausbuchtungen des angebrachten Rohrendes erstrecken, das Dichtungselement (13) eine Dichtung zwischen dem Rohrgehäuse und dem Rohrende gewährleistet und das Dichtungselement (13) eine Platzierung, welche von der axialen Platzierung der Ausbuchtungen und Aussparungen getrennt ist, genauer in einem Zwischenteil (10) der Mantelfläche (2) des Rohrgehäuses (1), mit einer Endanlage (17, 23) für das Rohr aufweist, **dadurch gekennzeichnet, dass** die zwei Aussparungen (3, 4) und eine Aussparung (14) zum Unterbringen des Dichtungselements (13) alle in das Rohrgehäuse (1) gebildet und alle zur Längsachse des Rohrgehäuses (1) nach innen gerichtet sind.

2. Endverbindung nach Anspruch 1, **dadurch gekennzeichnet, dass** die Endanlage (17, 23) mit einem geweiteten Teil (18/32) ausgestattet ist, welcher einen axialen Endanschlag (17) für das Rohrende (15) bildet.

3. Endverbindung nach Anspruch 2, **dadurch gekennzeichnet, dass** der geweitete Teil (32) durch einen banjoartigen Nippel mit Kontaktflächen (34) gebildet ist, welche sich in der Verbindungsebene befinden.

4. Endverbindung nach Anspruch 2, **dadurch gekennzeichnet, dass** der geweitete Teil durch ein Gewindeteil gebildet ist, um denselben mit einem entsprechenden festen Gewindeteil mittels der Endverbindung zu verbinden.

## Revendications

1. Raccord d'extrémité pour des tuyaux constitués d'un matériau rigide mais déformable, et comportant une extrémité de tuyau (15) ayant une chemise de tuyau (1) qui fait saillie à l'intérieur de l'extrémité de tuyau et a un diamètre extérieur (16) ayant une partie de raccordement (18/32) destinée au montage fixe sur une partie non-dévissable (31/42), laquelle chemise de tuyau (1) est symétrique en rotation le long d'un axe longitudinal (9) et est constituée d'un matériau relativement rigide et est munie d'une surface extérieure (2), qui a un diamètre qui est adapté au diamètre intérieur du tuyau de telle sorte que l'extrémité de tuyau peut être appliquée sur la chemise de tuyau, ladite chemise de tuyau incluant un organe d'étanchéification (13) disposé symétriquement entre deux parties évidées (3, 4) qui s'étendent périphériquement autour de la surface extérieure, parties évidées (3, 4) dans lesquelles s'étendent des parties en relief de l'extrémité de tuyau appliquée, ledit organe d'étanchéification (13) assurant l'étanchéification entre la chemise de tuyau et l'extrémité de tuyau, ledit organe d'étanchéification (13) ayant un positionnement qui est séparé du positionnement axial des parties en relief et évidées, plus précisément dans une partie intermédiaire (10) de la surface extérieure (2) de la chemise de tuyau (1), ayant une butée d'extrémité (17, 23) pour le tuyau, **caractérisé en ce que** les deux évidements (3, 4) et un évidemment (14) destiné à recevoir l'organe d'étanchéification (13) sont tous formés dans la chemise de tuyau (1) et sont tous dirigés vers l'intérieur en direction de l'axe longitudinal de la chemise de tuyau (1).

2. Raccord d'extrémité selon la revendication 1, **caractérisé en ce que** la butée d'extrémité (17, 23) est munie d'une partie élargie (18/32), qui forme une butée d'extrémité axiale (17) pour l'extrémité de tuyau (15).

3. Raccord d'extrémité selon la revendication 2, **caractérisé en ce que** la partie élargie (32) est constituée par un raccord de type banjo ayant des surfaces de contact (34), situées dans ledit plan de raccordement.

4. Raccord d'extrémité selon la revendication 2, **caractérisé en ce que** la partie élargie est constituée par une partie filetée afin d'être connectée à une partie fixe filetée de manière correspondante, par l'intermédiaire du raccord d'extrémité.
